# EUROPEAN PATENT SPECIFICATION

(11) **EP 1 561 204 B1**
(45) Date of publication and mention of the grant of the patent: **21.01.2009**
(21) Application number: 03758411.7
(22) Date of filing: 24.10.2003
(51) Int. Cl.: G10L 15/22

(54) **METHOD AND SYSTEM FOR SPEECH RECOGNITION**
VERFAHREN UND ANORDNUNG ZUR SPRACHERKENNUNG
PROCEDE ET SYSTEME DE RECONNAISSANCE DE LA PAROLE

(30) Priority: 02.11.2002 DE 10251112
(43) Date of publication of application: 10.08.2005
(73) Proprietor: Philips Intellectual Property & Standards GmbH, 20099 Hamburg (DE); Koninklijke Philips Electronics N.V., 5621 BA Eindhoven (NL)
(72) Inventor: KOOIMAN, Albert, Philips I.P. & Standards GmbH, 52066 Aachen (DE)
(74) Representative: Volmer, Georg
(86) International application number: PCT/IB2003/004717
(87) International publication number: WO 2004/042699

(56) References cited:
- EP-A- 1 170 726
- EP-A- 1 189 203
- US-A1- 2001 018 653
- US-A1- 2002 052 742
- US-A1- 2002 087 324
- US-A1- 2002 143 534

## Description

The invention relates to a method for speech recognition in which a speech signal of a user is analyzed so as to recognize speech information contained in the speech signal and a recognition result with a most probable match is converted into a speech signal again within a test procedure and output to the user for verification and/or correction. The invention also relates to a speech recognition system which includes a device for the detection of a speech signal of a user, including a speech recognition device for analyzing the detected speech signal in order to recognize speech information contained in the speech signal and to determine a recognition result with a most probable match as well as a speech output device for converting the most probable recognition result into speech information again within a test procedure and to output it to the user for verification and/or correction.

Speech recognition systems usually operate in such a manner that first the speech signal is spectrally or temporally analyzed and the analyzed speech signal is subsequently compared in segments with different models of feasible signal sequences with known speech information. To this end, the speech output device usually comprises a complete library of different feasible signal sequences, for example, the words that make sense in a language. The model which best matches a given segment of the speech signal is searched each time by comparing the received speech signal with the available models so as to obtain a recognition result. Customarily the probability of belonging to the relevant associated segment of the speech signal is calculated for each model. In as far as the speech signal concerns long texts, for example, one or more sentences, grammatical and/or linguistic rules are also taking into account during the analysis and the calculation of the probability of how well the individual models match the relevant segments of a speech signal. It is thus ensured not only that the individual segments of the long speech signals suitably match the relevant models available, but also that the context in which the speech signal segments occur is also taken into account in order to obtain a more sensible overall recognition result, thus reducing the error quote. However, there still is a residual probability that some sentences, parts of a sentence or words of a spoken text are incorrectly understood nevertheless.

Therefore, for most applications it is necessary that a user of the speech recognition system is given the opportunity to test the recognition result and to correct it if necessary. This is necessary in particular in the cases where the relevant user does not obtain a direct feedback regarding an entry, for example, in applications where the user speaks a long text which is subsequently stored in the form of written text or in another machine-readable form (referred to hereinafter as text form for brevity). Typical examples in this respect are dictation systems or applications in which messages are first converted into a text form which is subsequently processed or propagated via a communication network, for example, as an e-mail, as a fax or as an SMS. A further application of this kind concerns an automatic translation system in which a speech signal is first converted into the text form, after which a translation into a different language is made on the basis of this text form and finally the translated text is converted into a speech signal again so as to be output by means of a speech output device. In conventional dictation systems linked to PCs the recognition result can be displayed directly in a text form on a display screen of the PC so that the user can correct the text by means of the conventional editing functions. This correction method, however, is not suitable for applications which do not offer a possibility for visual display of the recognized text, for example, when devices without a suitable display device are used, for example, "normal" telephones, or for applications for partially sighted persons. In such cases it is necessary to output the relevant recognition result to the user via an automatic speech output device, for example, a text-to-speech generator, that is, in the form of speech, in such a manner that the user has the possibility of confirming or correcting the recognition result.

A method of this kind is described, for example, in US 6,219,628 B1. The cited document mentions several possibilities for correction. According to one possibility the entire recognized message is reproduced for the user and the user speaks the message once more if the recognition result does not correspond to the actually spoken message. This method is not very satisfactory, notably not in circumstances where the recognition error quote is comparatively high, for example, when a text is spoken in the presence of substantial noise, because the user may then have to speak the complete message a number of times so as to ultimately obtain the desired result. According to a second version respective certainty factors are determined automatically for given segments of the speech signal during the analysis of the speech signal. Subsequently, only those segments of the text which have a low certainty factor are output again to the user, that is, segments for which the probability that an error has occurred is highest. However, the text cannot be completely checked in this manner. According to a third version it is arranged to reproduce the text in segments, for example, in words or in sentences, and to insert a waiting interval at each end of the segment; the user then has the opportunity to individually confirm or reject every individual segment, for example, by way of the word "yes" or "no". If the user remains silent for a prolonged period of time during the pause, this silence is interpreted as a confirmation. In as far as the user rejects a reproduced segment, the user has the opportunity to speak this complete segment once more.

Granted, this third version already saves the user a substantial amount of time and is more comfortable than the first version where the complete text must be spoken again. However, it still has the drawback that the user may have to speak the segment to be corrected a number of times again, that is, in particular in the case of difficult recognition circumstances in which a high error quote occurs. This method involves a further problem when, for example, in the case of a particularly exceptional pronunciation of a part of the text by the user (for example, because of the user's dialect) the speech recognition system does not have the optimum models available so that, even when the text is spoken several times, it produces an incorrect recognition result as the most probable recognition result.

A completely different approach to the correction of speech recognition results is followed in US 2002/0143534 A1. It describes simultaneous text output via a display and the output of the recorded user's speech signals. In addition to the text output, an audio cursor is supplied in the text, which audio cursor shows the word corresponding to the speech signals that are output currently. With the help of a text cursor, a user can mark mistakes simultaneously to the ongoing speech signal output and correct mistakes.

In EP 1 189 203 A2 is described a speech recognition system in which a correction command is identified. This correction command is part of the original speech input by a user. That means that this kind of method is not suitable for use when a correction is to take place in the aftermath of a dictation procedure.

EP 1 170 726 A1 describes a speech recognition correction method for devices with limited or no display. A speech signal of a user is analyzed so as to recognize speech information contained in the speech signal and a recognition result with a most probable match is converted into a speech signal again within a test procedure and output to the user for verification and/or correction. Several alternative recognition results are generated,
which match the speech signal to be recognized with the next-highest probabilities. In the case of incorrectness of the supplied recognition result, a list of correction candidates is supplied so that the relevant segment in the supplied recognition result can be corrected on the basis of the corresponding segment of a selected alternative recognition result. During the
output of such correction candidates, the user can interrupt the output, e.g. by speech input, in order to select the correction candidate which he chooses. After that, the test procedure is continued for remaining, subsequent segments of the speech signal to be recognized. It is an object of the present invention to improve a method for speech recognition and a system for speech recognition of the kind set forth in such a manner that the correction of an incorrectly understood speech signal can be performed in a faster and simpler manner which is also more comfortable for the user.

This object is achieved in that during the analysis directly a number of alternative recognition results is generated, that is, at least one alternative, which match the speech signal to be recognized with the next-highest probabilities. The output during the test procedure then takes place in such a manner that the user can interrupt the output in the case of incorrectness of the supplied recognition result. Thereby the voice activity of the user is permanently monitored during the output of the recognition result within the test procedure and that the output is interrupted in response to the reception of a speech signal of the user. For a segment of the relevant recognition result which has been output last before an interruption the corresponding segments of the alternative recognition result are then automatically output, again in the form of speech, for selection by the user. Subsequently, the relevant segment in the supplied recognition result is corrected on the basis of the segment of one of the alternative recognition results selected by the user. Finally, the test procedure is continued for the remaining, subsequent segments of the speech signal to be recognized.

This method utilizes the fact that the speech recognition device already has to test a plurality of alternative recognition results in respect of their probability anyway so as to determine the most probable recognition result. Instead of rejecting the less probable results again during the analysis, the speech recognition device now generates the n best sentences or word hypothesis graphs as alternative recognition results and stores these alternatives, for example, in a buffer memory for the further test procedure. The amount of additional work to be done by the speech recognition device is only very small. During the test procedure this additional information can be used to offer the relevant user alternatives for the incorrectly recognized segment of the recognition result. Because the probabilities of the various alternatives differ only slightly in many cases, there is often a comparatively high probability that the user will find the correct recognition result among the alternatives. The user can then simply select this correct alternative, without having to speak the relevant text segment again.
This eliminates the risk that the text segment which has been spoken again for the correction is incorrectly recognized once again.

During the output of the recognition result, the voice activity of the user is permanently monitored during the output of the recognition result. As soon as the user makes a comment during the output, the output is interrupted. This means that a so-called "barge-in" method is used. Unnecessary pauses can thus be dispensed with during the output, so that the test procedure can be very quickly terminated.

In order to avoid that the speech output of the recognition result is interrupted also in cases where the user makes an utterance during the speech output which causes an interruption of the output even though it was not meant to do so since it was intended, for example, for other persons present in the room, it is arranged that the user can immediately continue the output by speaking a given command such as, for example, "continue", without having to listen to the various alternative recognition results first.

In conformity with a very advantageous version a request signal is output to the user if the user does not select any segment of the alternative recognition results because, for example, all recognition results were incorrect, thus requesting the user to speak the relevant segment again for correction.

There are various possibilities for the selection of the supplied alternative recognition results.

According to a first version the recognition results are successively output and subsequently it is awaited whether the user confirms the recognition result. In the case of a confirmation, the alternative recognition result is accepted as being correct. Otherwise the next alternative recognition result is output.

According to a second version, all alternative recognition results, or the relevant segments of the alternative recognition results, are continuously output in succession and the user subsequently selects the appropriate recognition result. Preferably, each alternative recognition result is then output together with an indicator, for example, a digit or a letter, which is associated with the relevant recognition result. The user can then perform the selection of the relevant segment of the various alternative recognition results by inputting the indicator simply by speaking, for example, the relevant digit or letter.

In a further preferred version a key signal of a communication terminal, for example, a DTMF signal of a telephone set, is associated with the indicator. The selection of one of the segments is then performed by actuating the relevant key of the communication terminal. This offers the advantage that the selection of the recognition result takes place without using an intermediate further speech recognition operation, so that any errors introduced thereby are precluded.

Alternatively, a barge-in method can also be used for the output of the alternative recognition results. This means that in that case the segments of the alternative recognition results are output without a pause and the user simply says "stop" or "yes" or the like when the correct recognition result is output.

After a correction of a segment in a very advantageous version the various recognition results are evaluated again in respect of their probably of matching the relevant speech signal to be recognized, that is, while taking into account the corrected segment as well as all previously confirmed or corrected segments. The test procedure is then continued by outputting the subsequent segment of the recognition result which has the highest probability after the re-evaluation. As a result of the re-evaluation on the basis of all previously corrected or confirmed parts of the speech signal to be recognized, in a context-dependent probability analysis the recognition result can be permanently improved still in the course of the test procedure, thus reducing the probability of corrections being necessary in subsequent sections.

When long texts or messages are to be recognized, various possibilities are available for carrying out the test procedure.

According to one version, the test procedure is carried out only after input of a complete text by the user. The fact that the desired text has been spoken completely can be signaled, for example, by the user by means of an appropriate command such as "end" or the like.

According to a further version, the test procedure is carried out already after the input of a part of a complete text. This offers the advantage that already verified or corrected parts of the text can possibly be further processed in other components of the application or stored in a memory, without the speech recognition system still being burdened thereby. For example, a test procedure can be carried out for a previously input part of a text whenever a given length of the part of the text or speech signal is reached and/or when a speech pause of given duration occurs and/or when the user specifies this by means of a special command.

A speech recognition system in accordance with the invention must include a speech recognition device for the execution of the method in accordance with the invention which is constructed in such a manner that during the analysis it generates a number of alternative recognition results and outputs or stores such results which, in relation to the most probable matching recognition result that is output anyway, match the speech signal to be recognized with the next-highest probabilities. Moreover, the speech recognition system requires means for interruption of the output within the test procedure by the user as well as a dialog control device which automatically outputs the corresponding segments of the alternative recognition results for a segment of the relevant recognition result last output before an interruption. Thereby the means for interrupting the output are arranged in such a manner that they permanently monitor the voice activity of the user during the output of the recognition result within the test procedure and that they can interrupt the output in response to the reception of a speech signal of the user. Furthermore, the speech recognition system should include means for selecting one of the supplied segments of the alternative recognition results as well as a correction device for correcting the relevant segment in the recognition result output first on the basis of the corresponding segment of the selected alternative recognition result.

In as far as the selection of the alternative recognition result should take place by means of a key signal of a communication terminal, the speech recognition system should also include an appropriate interface for receiving such a key signal, for recognizing it and for using it to select one of the supplied segments.

The speech recognition system in accordance with the invention can advantageously be realized essentially by means of suitable software on a computer or in a speech control of an apparatus. For example, the speech recognition device and the dialog control device can be realized completely in the form of software modules. A device for generating speech on the basis of computer-readable texts, for example a so-called TTS converter (Text-To-Speech converter) can also be realized by means of appropriate software. It is merely necessary for the system to comprise a facility for speech input, for example, a microphone with a suitable amplifier, and for speech output, for example, a loudspeaker with a suitable amplifier.

The speech recognition system may then be present in a server which can be reached via a customary communication network, for example, a telephone network or the Internet. In this case it suffices when the speech input device and the speech output device, that is, the microphone, the loudspeaker and relevant amplifiers, are present in a communication terminal of the user which is connected to the server of the speech recognition system via the relevant network. Furthermore, it may also be that the speech recognition system is not realized within a single apparatus, for example, on a single server. Various components of the system may instead be situated in different locations which are interconnected via a suitable network. The speech recognition system in accordance with the invention may be associated with a very specific application, for example, an application which converts voicemail messages within a communication system into SMS messages or e-mails. However, the speech recognition system may alternatively be available as a service system for a plurality of different applications, thus forming for a plurality of applications an interface for the users of the relevant application.

The invention will be described in detail hereinafter on the basis of an embodiment as shown in the accompanying drawings. Therein:
Fig. 1 is a diagrammatic block diagram of a speech recognition system in accordance with the invention, and
Fig. 2 shows a flow chart illustrating the correction method.

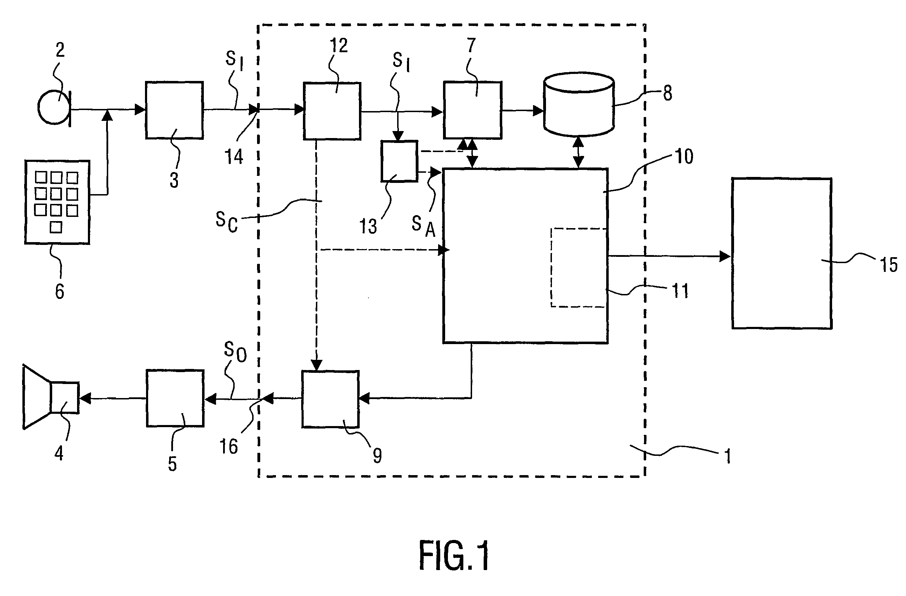

The embodiment of a speech recognition system 1 as shown in Fig. 1 comprises an input 14 whereto a microphone 2 is connected via an amplifier 3. The speech recognition system 1 also includes an output 16 whereto a loudspeaker 4 is connected, via an amplifier 5, in order to output speech signals. The microphone 2 and the associated amplifier 3 and the loudspeaker 4 and the associated amplifier 5 form part of an apparatus which is remote from the speech recognition system 1 and which communicates with the speech recognition system 1 via a communication network, for example, a telephone network.

The communication terminal also includes a keyboard 6 via which acoustic signals, for example, DTMF (Dual Tone Multi Frequency) signals can be generated; these signals are also applied to the input 14 of the speech recognition system via the speech signal channel.

Speech signals S_{I} arriving at the input 14 from the microphone 2, via the amplifier 3, are converted into a readable or machine-readable text by the speech recognition system 1 and conducted to an application 15, for example, for the transmission of SMS messages or e-mail; this application subsequently processes and/or transmits said text data accordingly.

To this end, at the input side the acoustic signal first reaches a so-called Voice Activity Detector (VAD) 12 which tests the incoming signal only as to whether there is actually an incoming speech signal S_{I} from a user or whether the signal concerns only background noise etc. The speech signal S_{I} is then applied to a speech recognition device 7 which analyzes the speech signal S_{I} in a customary manner in order to recognize speech information contained therein and which determines a recognition result with a most probable match.

In conformity with the invention the speech recognition device 7 is arranged in such a manner that in addition to the recognition result which matches the speech recognition signal S_{I} to be recognized with the highest probability, there is also generated a number of alternative recognition results which match the speech recognition signal S_{I} to be recognized with the next-highest probabilities.

The recognition result which matches the speech signal S_{I} to be recognized with the highest probability is then applied in text form to a dialog control device 10 which conducts this most probable recognition result to a text-to-speech generator (TTS generator) 9. The alternative recognition results can also be applied directly to the dialog control device 10 in which they are buffered, or can be stored in a separate memory 8 by the speech recognition device 7, which separate memory can be accessed at all times by the dialog control device 10. Using the TTS generator 9, the most probable recognition result is then converted into a speech signal and output in the form of speech, via the amplifier 5 and the loudspeaker 4, within a test procedure for the verification and/or correction by the user.

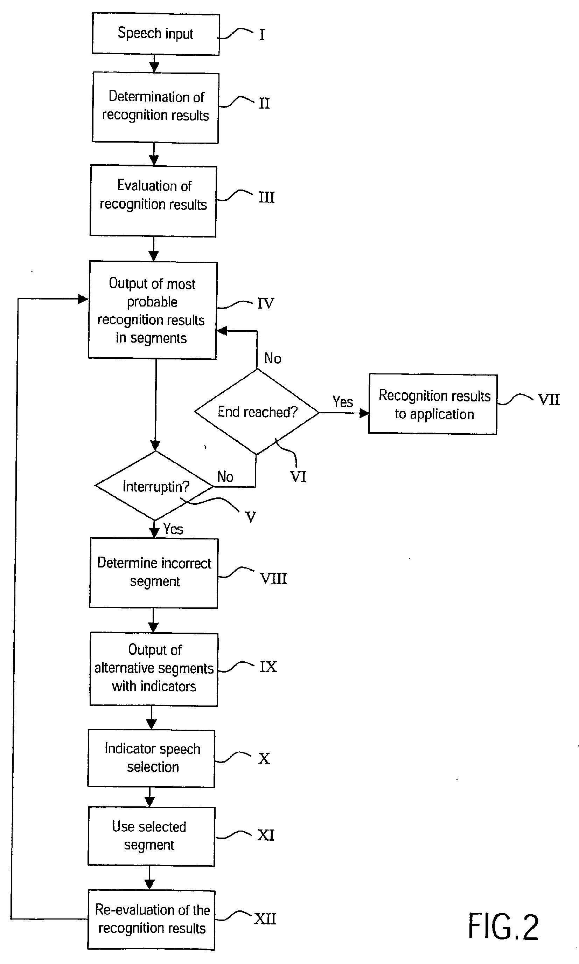

The exact execution of this test procedure will be described in detail hereinafter with reference to Fig. 2.

In the step I the method commences with the previously described speech input. Subsequently, in the step II of the method the various alternative recognition results are determined and ultimately evaluated in the step III of the method in order to determine which recognition result best matches the speech signal S_{I} to be recognized. Subsequently, in the step IV of the method the most probable recognition result is output in segments, said output in segments taking place continuously so that the individual segments per se cannot be recognized by the user. The individual segments may be, for example, the individual words of a sentence or a word hypothesis graph or also parts of a sentence or parts of a word hypothesis graph.

After each segment it is tested in the step V of the method whether the output is interrupted by the user. This is possible, for example, when the user expresses himself/herself accordingly during the output of the recognition result. The voice activity of the user is immediately recognized by the VAD 12 which stops, via a corresponding control signal S_{C}, the TTS generator 9 and at the same time applies the control signal S_{C} also to the dialog control device 10 so that the latter also registers the interruption of the output by the ' user. If no interruption takes place, it is tested whether the end of the input text has been reached (step VI of the method). If this is the case, the recognition result is deemed to have been verified by the user and the recognition result is applied to the application 15 (step VII of the method). If the end of the text has not yet been reached, the output of the most probable recognition result is continued.

However, if an interruption is registered in the step V of the method, in the step VIII of the method it is first determined which incorrect segment is concerned. For the sake of simplicity it is assumed herein that this is the segment which has been output last, that is, the segment output directly before the output was interrupted by the user.

The dialog control device 10 then accesses, in as far as the alternative recognition results were not stored within the dialog control device 10 itself, the buffer 8 and determines the corresponding segments of the alternative recognition results corresponding to the incorrect segment determined in the step VIII of the method. The corresponding segments, or the alternative recognition results, are then associated with indicators, for example, the digits 1 to 0.

Via the TTS generator 9, the alternative segments then available are output, each time together with the associated indicators, in the form of speech to the user (step IX of the method).

In the step X of the method, finally, the user can select a suitable segment from the alternative recognition results by depressing a key, corresponding to the indicator, on a keyboard 6. Pressing this key generates a DTMF signal which is conducted, via the speech channel, to the input 14 of the speech recognition system 1. This DTMF signal is then recognized by a DTMF recognizer 13 which is connected parallel to the speech recognition device 7. The DTMF recognizer 13 outputs a corresponding selection signal S_{A} to the dialog control device 10, which signal triggers a correction unit 11 to replace the incorrectly recognized segment by the relevant segment of the selected alternative recognition result (step XI of the method). The DTMF recognition unit 13 can also apply a signal to the speech recognition device 7 upon recognition of a DTMF signal, so that the speech recognition device 7, for example, is deactivated so that it does not unnecessarily attempt to analyze the DTMF signal.

After successful correction, a re-evaluation of all recognition results is carried out in the step XII of the method, that is, of the most probable recognition result and the alternative recognition results. Preferably, this re-evaluation is performed in the speech recognition device 7 which is also capable of accessing the buffer 8 or which receives the data required for this purpose from the dialog control device 10. This context-dependent re-evaluation of the recognition results takes into account all previously verified or corrected segments, meaning that the fact is taken into account that the probability is each time 100% for the relevant segments whereas for all alternative segments the probability is 0%. It can thus be achieved, for example, that on the basis of the already known segments those hypotheses which, without this prior knowledge, have a high probability are rejected while other hypotheses which originally have a low probability now become very probable. As a result, the error quote in the output of the subsequent segments is significantly reduced and hence the overall correction method is accelerated. Additionally or alternatively the reliably recognized parts of the utterance of the user can also be taken into account for an adaptation of the language models and/or the acoustic models.

It is to be noted again that the described speech recognition system and the execution of the method concern only a special embodiment of the invention and that a person skilled in the art will be capable of modifying the speech recognition system and the method in various ways. For example, it is notably possible and also sensible to insert in the method a step in which the user has the opportunity, in as far as none of the segments of the alternative recognition results is deemed to be correct, to speak the segment again. It is also possible that instead of the selection by means of a DTMF-capable keyboard 6, the selection is performed by means of speech input or that the keyboard transmits other signals which are applied, via a separate data channel, to the speech recognition system 1 which can then process the signals accordingly. Similarly, the interruption of the speech output within the test procedure may also take place by means of a specific DTMF signal or the like.

## Claims

1. A method for speech recognition in which a speech signal of a user is analyzed so as to recognize speech information contained in the speech signal and a recognition result with a most probable match is converted into a speech signal again within a test procedure and output to the user for verification and/or correction, whereby during the analysis a number of alternative recognition results is generated, said alternative recognition results matching the speech signal to be recognized with the next-highest probabilities,
and that the output takes place within the test procedure in such a manner that the user can interrupt the output in the case of incorrectness of the supplied recognition result whereby the voice activity of the user is permanently monitored during the output of the recognition result within the test procedure and that the output is interrupted in response to the reception of a speech signal of the user
and that for a segment of the relevant recognition result which has been output last before an interruption the corresponding segments of the alternative recognition results are automatically output for selection by the user,
and that finally the relevant segment in the supplied recognition result is corrected on the basis of the corresponding segment of a selected alternative recognition result,
after which the test procedure is continued for remaining, subsequent segments of the speech signal to be recognized.

2. A method as claimed in claim 1, **characterized in that** after a correction of a segment output within the test procedure, the various recognition results are re-evaluated in respect of their probability of matching the relevant speech signal to be recognized, that is, while taking into account the segment corrected last and/or the already previously confirmed or corrected segments, the test procedure being continued with the output of the next segment of the recognition result which exhibits the highest probability after the re-evaluation.

3. A method as claimed in claim 1 or 2,
**characterized in that** if no segment of the alternative recognition results is selected, a request signal is output requesting the user to speak the relevant segment again for correction.

4. A method as claimed in one of the claims 1 to 3,
**characterized in that** with each alternative recognition result there is associated an indicator and that during the test procedure the relevant segments of the alternative recognition results are output each time together with the associated indicator and the selection of a segment of an alternative recognition result takes place by inputting the indicator.

5. A method as claimed in claim 4,
**characterized in that** the indicator is a digit or a letter.

6. A method as claimed in claim 4 or 5,
**characterized in that** with the indicator there is associated a key signal of a communication terminal and that the selection of a segment of an alternative recognition result takes place by actuation of the relevant key of the communication terminal.

7. A method as claimed in one of the claims 1 to 6,
**characterized in that** the test procedure takes place only after termination of the input of a complete text by the user.

8. A method as claimed in one of the claims 1 to 6,
**characterized in that** the test procedure takes place already after the input of a part of a complete text by the user.

9. A speech recognition system (1) which comprises:
- a device (2) for detecting a speech signal of a user,
- a speech recognition device (7) for analyzing the detected speech signal (SI) for the recognition of speech information contained in the speech signal (SI) and for determining a recognition result with a most probable match,
- and a speech output device (9) for converting the most probable recognition result into speech information again within a test procedure and to output it to the user for verification and/or correction,
the speech recognition device (7) being constructed in such a manner that during the analysis it generates a number of alternative recognition results which match the speech signal(SI) to be recognized with the next-highest probabilities,
and the speech recognition system (1) comprising:
- means (12) for interrupting the output during the test procedure by the user,
- a dialog control device (10) which automatically outputs respective corresponding segments of the alternative recognition results for a segment of the relevant recognition result output last before an interruption,
- means (6, 13) for selecting one of the supplied segments of the alternative recognition results,
- and a correction unit (11) for the correction of the relevant segment in the recognition result output next on the basis of the corresponding segment of a selected alternative recognition result,
whereby means (12) for interrupting the output are arranged in such a manner that they permanently monitor the voice activity of the user during the output of the recognition result within the test procedure and that they can interrupt the output in response to the reception of a speech signal of the user.

10. A system (1) as claimed in claim 9, **characterized in that** the speech recognition device (7) is arranged in such a manner that after a correction of a segment output within the test procedure, it can re-evaluate the various recognition results in respect of their probability of matching the relevant speech signal to be recognized,
that is, while taking into account the segment corrected last and/or the already previously confirmed or corrected segments, the test procedure being continued with the output of the next segment of the recognition result which exhibits the highest probability after the re-evaluation.

11. A computer program product which comprises program code means for executing all steps of a method as claimed in one of the claims 1 to 8 when the program is run on a computer.

## Patentansprüche

1. Verfahren zur Spracherkennung, bei welchem ein Sprachsignal eines Benutzers zur Erkennung einer im Sprachsignal enthaltenen Sprachinformation analysiert wird und ein mit einer größten Wahrscheinlichkeit passendes Erkennungsergebnis innerhalb einer Prüfprozedur wieder in ein Sprachsignal umgewandelt und zur Verifikation und/oder Korrektur an den Nutzer ausgegeben wird,
wobei bei der Analyse eine Anzahl von alternativen Erkennungsergebnissen generiert wird, welche mit den nächstgrößten Wahrscheinlichkeiten zu dem zu erkennenden Sprachsignal passen,
und die Ausgabe innerhalb der Prüfprozedur derart erfolgt, dass der Benutzer bei einer Fehlerhaftigkeit des ausgegebenen Erkennungsergebnisses die Ausgabe unterbrechen kann, wobei bei der Ausgabe des Erkennungsergebnisses innerhalb der Prüfprozedur die Sprachaktivität des Benutzers permanent überwacht wird und in Reaktion auf den Empfang eines Sprachsignals des Benutzers die Ausgabe unterbrochen wird
und automatisch für einen vor einer Unterbrechung zuletzt ausgegebenen Abschnitt des betreffenden Erkennungsergebnisses die entsprechenden Abschnitte der alternativen Erkennungsergebnisse für eine Auswahl durch den Benutzer ausgegeben werden,
und schließlich der betreffende Abschnitt im ausgegebenen Erkennungsergebnis auf Basis des entsprechenden Abschnitts eines ausgewählten alternativen Erkennungsergebnisses korrigiert wird, woraufhin die Prüfprozedur für verbleibende nachfolgende Abschnitte des zu erkennenden Sprachsignals fortgesetzt wird.

2. Verfahren nach Anspruch 1,
**dadurch gekennzeichnet, dass** nach einer Korrektur eines innerhalb der Prüfprozedur ausgegebenen Abschnitts die verschiedenen Erkennungsergebnisse bezüglich ihrer Wahrscheinlichkeiten, mit denen sie jeweils zu dem zu erkennenden Sprachsignal passen, unter Berücksichtigung des zuletzt korrigierten Abschnitts und/oder der bereits zuvor bestätigten oder korrigierten Abschnitte neu bewertet werden, wobei die Prüfprozedur mit der Ausgabe des nachfolgenden Abschnitts des Erkennungsergebnisses fortgesetzt wird, welches nach der Neubewertung die höchste Wahrscheinlichkeit aufweist.

3. Verfahren nach Anspruch 1 oder 2,
**dadurch gekennzeichnet, dass**, falls kein Abschnitt der alternativen Erkennungsergebnisse ausgewählt wird, ein Anforderungssignal an den Benutzer ausgegeben wird, den betreffenden Abschnitt für eine Korrektur neu zu sprechen.

4. Verfahren nach einem der Ansprüche 1 bis 3,
**dadurch gekennzeichnet, dass** jedem alternativen Erkennungsergebnis ein Indikator zugeordnet wird und bei der Prüfprozedur die betreffenden Abschnitte der alternativen Erkennungsergebnisse jeweils gemeinsam mit dem zugehörigen Indikator ausgegeben werden und die Auswahl eines Abschnitts eines alternativen Erkennungsergebnisses durch eine Eingabe des Indikators erfolgt.

5. Verfahren nach Anspruch 4,
**dadurch gekennzeichnet, dass** der Indikator eine Ziffer oder ein Buchstabe ist.

6. Verfahren nach Anspruch 4 oder 5,
**dadurch gekennzeichnet, dass** dem Indikator ein Tastensignal eines Kommunikationsendgeräts zugeordnet ist und die Auswahl eines Abschnitts eines alternativen Erkennungsergebnisses durch Betätigung der entsprechenden Taste des Kommunikationsendgeräts erfolgt.

7. Verfahren nach einem der Ansprüche 1 bis 6,
**dadurch gekennzeichnet, dass** die Prüfprozedur erst nach Abschluss der Eingabe eines vollständigen Texts durch den Benutzer erfolgt.

8. Verfahren nach einem der Ansprüche 1 bis 6,
**dadurch gekennzeichnet, dass** die Prüfprozedur bereits nach Eingabe eines Teils eines vollständigen Texts durch den Benutzer erfolgt.

9. Spracherkennungssystem (1) mit
- einer Vorrichtung (2) zur Erfassung eines Sprachsignals eines Benutzers,
- einer Spracherkennungseinrichtung (7), um das erfasste Sprachsignal (SI) zur Erkennung einer im Sprachsignal (SI) enthaltenen Sprachinformation zu analysieren und ein mit einer größten Wahrscheinlichkeit passendes Erkennungsergebnis zu ermitteln,
- und einer Sprachausgabeeinrichtung (9), um das wahrscheinlichste Erkennungsergebnis innerhalb einer Prüfprozedur wieder in eine Sprachinformation umzuwandeln und zur Verifikation und/oder Korrektur an den Nutzer auszugeben,
wobei die Spracherkennungseinrichtung (7) derart ausgebildet ist, dass sie bei der Analyse eine Anzahl von alternativen Erkennungsergebnissen generiert, welche mit den nächstgrößten Wahrscheinlichkeiten zu dem zu erkennenden Sprachsignal (SI) passen, und das Spracherkennungssystem (1) Folgendes umfasst:
- Mittel (12) zur Unterbrechung der Ausgabe innerhalb der Prüfprozedur durch den Benutzer,
- eine Dialog-Steuereinrichtung (10), welche automatisch für einen vor einer Unterbrechung zuletzt ausgegebenen Abschnitt des betreffenden Erkennungsergebnisses jeweils entsprechende Abschnitte der alternativen Erkennungsergebnisse ausgibt,
- Mittel (6, 13) zur Auswahl eines der ausgegebenen Abschnitte der alternativen Erkennungsergebnisse
- und eine Korrektureinheit (11) zur Korrektur des betreffenden Abschnitts im zunächst ausgegebenen Erkennungsergebnis auf Basis des entsprechenden Abschnitts eines ausgewählten alternativen Erkennungsergebnisses,
wobei Mittel (12) zur Unterbrechung der Ausgabe so ausgebildet sind, dass sie bei der Ausgabe des Erkennungsergebnisses innerhalb der Prüfprozedur die Sprachaktivität des Benutzers permanent überwachen und dass sie in Reaktion auf den Empfang eines Sprachsignals des Benutzers die Ausgabe unterbrechen können.

10. System (1) nach Anspruch 9, **dadurch gekennzeichnet, dass** die Spracherkennungseinrichtung (7) so ausgebildet ist, dass es nach einer Korrektur eines innerhalb der Prüfprozedur ausgegebenen Abschnitts die verschiedenen Erkennungsergebnisse bezüglich ihrer Wahrscheinlichkeiten, mit denen sie jeweils zu dem zu erkennenden Sprachsignal passen, unter Berücksichtigung des zuletzt korrigierten Abschnitts und/oder der bereits zuvor bestätigten oder korrigierten Abschnitte neu bewerten kann, wobei die Prüfprozedur mit der Ausgabe des nachfolgenden Abschnitts des Erkennungsergebnisses fortgesetzt wird, welches nach der Neubewertung die höchste Wahrscheinlichkeit aufweist.

11. Computerprogrammprodukt, das Programmcode-Mittel umfasst, um alle Schritte eines Verfahrens nach einem der Ansprüche 1 bis 8 auszuführen, wenn das Programm auf einem Computer ausgeführt wird.

## Revendications

1. Procédé de reconnaissance vocale dans lequel un signal vocal d'un utilisateur est analysé afin de reconnaître des informations vocales contenues dans le signal vocal et un résultat de reconnaissance avec une correspondance la plus probable est à nouveau converti en un signal vocal au sein d'une procédure d'essai et sorti pour être envoyé à l'utilisateur pour une vérification et/ou une correction,
**caractérisé en ce que**, au cours de l'analyse, un nombre de résultats de reconnaissance alternatifs est généré, lesdits résultats de reconnaissance alternatifs correspondant au signal vocal destiné à être reconnu avec les probabilités les plus élevées suivantes,
et que la sortie se fait au sein de la procédure d'essai de manière telle que l'utilisateur puisse interrompre la sortie dans le cas d'inexactitude du résultat de reconnaissance fourni moyennant quoi l'activité vocale de l'utilisateur est surveillée en permanence au cours de la sortie du résultat de reconnaissance au sein de la procédure d'essai et que la sortie est interrompue en réponse à la réception d'un signal vocal de l'utilisateur et que, pour un segment du résultat de reconnaissance pertinent qui a été sorti en dernier avant une interruption, les segments correspondants des résultats de reconnaissance alternatifs sont automatiquement sortis pour une sélection par l'utilisateur,
et que, enfin, le segment pertinent dans le résultat de reconnaissance fourni est corrigé sur la base du segment correspondant d'un résultat de reconnaissance alternatif sélectionné, après quoi la procédure d'essai est continuée pour les segments suivants restants du signal vocal destiné à être reconnu.

2. Procédé selon la revendication 1, **caractérisé en ce que**, après une correction d'un segment sorti au sein de la procédure d'essai, les divers résultats de reconnaissance sont réévalués en ce qui concerne leur probabilité de correspondre au signal vocal pertinent destiné à être reconnu, à savoir, tout en prenant en compte le segment corrigé en dernier et/ou les segments déjà confirmés ou corrigés précédents, la procédure d'essai étant continuée avec la sortie du segment suivant du résultat de reconnaissance qui présente la probabilité la plus élevée après la réévaluation.

3. Procédé selon la revendication 1 ou 2, **caractérisé en ce que**, si aucun segment des résultats de reconnaissance alternatifs n'est sélectionné, un signal de demande est sorti demandant à l'utilisateur de prononcer à nouveau le segment pertinent pour la correction.

4. Procédé selon une des revendications 1 à 3,
**caractérisé en ce que**, à chaque résultat de reconnaissance alternatif, est associé un indicateur et que, au cours de la procédure d'essai, les segments pertinents des résultats de reconnaissance alternatifs sont sortis à chaque fois conjointement à l'indicateur associé et la sélection d'un segment d'un résultat de reconnaissance alternatif se fait en entrant l'indicateur.

5. Procédé selon la revendication 4,
**caractérisé en ce que** l'indicateur est un chiffre ou une lettre.

6. Procédé selon la revendication 4 ou 5,
**caractérisé en ce que**, à l'indicateur, est associé un signal de touche d'un terminal de communication et que la sélection d'un segment d'un résultat de reconnaissance alternatif se fait par actionnement de la touche pertinente du terminal de communication.

7. Procédé selon une des revendications 1 à 6,
**caractérisé en ce que** la procédure d'essai se fait seulement après la fin de l'entrée d'un texte complet par l'utilisateur.

8. Procédé selon une des revendications 1 à 6,
**caractérisé en ce que** la procédure d'essai se fait déjà après l'entrée d'une partie d'un texte complet par l'utilisateur.

9. Système de reconnaissance vocale (1) qui comprend :
- un dispositif (2) pour détecter un signal vocal d'un utilisateur,
- un dispositif de reconnaissance vocale (7) destiné à analyser le signal vocal détecté (SI) pour la reconnaissance d'informations vocales contenues dans le signal vocal (SI) et destiné à déterminer un résultat de reconnaissance avec une correspondance la plus probable,
- et un dispositif de sortie vocale (9) destiné à convertir le résultat de reconnaissance le plus probable à nouveau en informations vocales au sein d'une procédure d'essai et à le sortir pour le fournir à l'utilisateur pour une vérification et/ou une correction,
le dispositif de reconnaissance vocale (7) étant construit de manière telle que, au cours de l'analyse, il génère un nombre de résultats de reconnaissance alternatifs qui correspondent au signal vocal (SI) destiné à être reconnu avec les probabilités les plus élevées suivantes, et le système de reconnaissance vocale (1) comprenant :
- des moyens (12) destinés à interrompre la sortie au cours de la procédure d'essai par l'utilisateur,
- un dispositif de contrôle de dialogue (10) qui sort automatiquement des segments correspondants respectifs des résultats de reconnaissance alternatifs pour un segment du résultat de reconnaissance pertinent sorti en dernier avant une interruption,
- des moyens (6, 13) destinés à sélectionner un des segments fournis des résultats de reconnaissance alternatifs,
- et une unité de correction (11) pour la correction du segment pertinent dans le résultat de reconnaissance sorti ensuite sur la base du segment correspondant d'un résultat de reconnaissance alternatif sélectionné,
moyennant quoi les moyens (12) destinés à interrompre la sortie sont agencés de manière telle qu'ils surveillent en permanence l'activité vocale de l'utilisateur au cours de la sortie du résultat de reconnaissance au sein de la procédure d'essai et qu'ils surveillent en permanence l'activité vocale de l'utilisateur au cours de la sortie du résultat de reconnaissance au sein de la procédure d'essai et qu'ils puissent interrompre la sortie en réponse à la réception d'un signal vocal de l'utilisateur.

10. Système (1) selon la revendication 9, **caractérisé en ce que** le dispositif de reconnaissance vocale (7) est agencé de manière telle que, après une correction d'un segment sorti au sein de la procédure d'essai, il puisse réévaluer les divers résultats de reconnaissance en ce qui concerne leur probabilité de correspondre au signal vocal pertinent destiné à être reconnu, à savoir, tout en prenant en compte le segment corrigé en dernier et/ou les segments déjà confirmés ou corrigés précédents, la procédure d'essai étant continuée avec la sortie du segment suivant du résultat de reconnaissance qui présente la probabilité la plus élevée après la réévaluation.

11. Produit-programme informatique qui comprend des moyens de code de programme pour exécuter toutes les étapes d'un procédé selon une des revendications 1 à 8 lorsque le programme est exécuté sur un ordinateur.
